# EUROPEAN PATENT APPLICATION

(11) **EP 2 581 349 A1**
(43) Date of publication of application: **17.04.2013**
(21) Application number: 10852679.9
(22) Date of filing: 08.06.2010
(51) Int. Cl.: C03C 10/16

(54) **TRANSPARENT GLASS CERAMIC EMITTING WHITE LIGHT AND PREPARATION METHOD THEREOF**

(71) Applicant: Ocean's King Lighting Science&Technology Co., Ltd., Guangdong 518052 (CN)
(72) Inventor: ZHOU, Mingjie, Shenzhen Guangdong 518054 (CN); WENG, Fangyi, Shenzhen Guangdong 518054 (CN); MA, Wenbo, Shenzhen Guangdong 518054 (CN)
(74) Representative: Johnson, Richard Alan
(86) International application number: PCT/CN2010/073681
(87) International publication number: WO 2011/153686

(57) **Abstract**

A transparent glass ceramic emitting white light and preparation method thereof are provided. The chemical formula of the transparent glass ceramic is aSiO₂·bAl₂O₃·cNaF·dCeF₃·xDyF₃, wherein a, b, c, d, and x are mole fractions, a is 35∼50, b is 15∼30, c is 5∼20, d is 5∼20, x is 0.01∼1, and a+b+c+d=100. The transparent glass ceramic can be substituted for the combination of epoxy resin or silica gel and fluorescent powder to seal LED. The transparent glass ceramic has strong excitation spectrum with broadband at ultraviolet area, and can emit strong white light under the excitation of ultraviolet light.

## Description

### FIELD OF THE INVENTION

The present invention relates to the field of photoelectron and light technology, particularly to a transparent glass ceramic emitting white light and preparation method thereof.

### BACKGROUND OF THE INVENTION

In recent years, compared to ordinary incandescent and fluorescent lamps, white light LED has drawn wide attention because it has great advantages in energy saving and environmental protection to be a new generation of lighting source. Under the same luminance, the power consumption is only 1/10 of an ordinary incandescent lamp, and life is up to 100,000 hours. Besides, white light LED has many advantages, such as energy saving, flexible, etc, it can be widely applied in directions, display, decoration, backlighting, general lighting and other fields. At present, blue light or purple light LED chip matched with suitable fluorescent powder which sealed on LED chip using epoxy resin or silica gel, are provided in most white light LED lighting devices. However, due to different aging speeds of fluorescent powder and blue light chip, color coordinate is not stable, and white light is easy to shift. In addition, as the epoxy resin or silica gel has long been under radiation of blue light or ultraviolet, the epoxy resin for encapsulation is easy to be aging, resulting in shortening the life of devices and other problems.

The present invention aims at solving the technical problem of proving a transparent glass ceramic emitting white light having good light transmittance, chemical stability and thermal stability, and preparation methods thereof in order to solve the problems that the life of conventional fluorescent powder is short, their preparation is costly, and in high demand on experimental conditions.

### SUMMARY OF THE INVENTION

The technical solution to solve the technical problem in the present invention is: to provide a transparent glass ceramic emitting white light, said transparent glass ceramic emitting white light has the chemical formula of aSiO₂·bAl₂O₃·cNaF·dCeF₃·xDyF₃, wherein a, b, c, d, and x are mole fractions, a+b+c+d=100, a is in the range of 35 to 50, b is in the range of 15 to 30, c is in the range of 5 to 20, d is in the range of 5 to 20, x is in the range of 0.01 to 1.

In the transparent glass ceramic emitting white light of the present invention, a is in the range of 40 to 50, b is in the range of 20 to 30, c is in the range of 10 to 20, d is in the range of 10 to 20, x is in the range of 0.1 to 1.

And, a preparation method of transparent glass ceramic emitting white light, comprising:

step 1: providing silica, alumina, sodium fluoride, cerium fluoride and dysprosium fluoride according to the stoichiometric ratio, said stoichiometric ratio is mole ratio of corresponding elements in the chemical formula of aSiO₂·bAl₂O₃·cNaF·dCeF₃·xDyF₃, wherein a is in the range of 35 to 50, b is in the range of 15 to 30, c is in the range of 5 to 20, d is in the range of 5 to 20, x is in the range of 0.01 to 1;

step 2: mixing and grinding the compounds of step 1 uniformly, heating at high temperature, keeping the temperature constant to form mixed melt;

step 3: pouring the mixed melt obtained in step 2 into pre-heated mould for molding, glass precursor is obtained;

step 4: annealing the glass precursor obtained in step 3, then heating and maintaining the temperature to crystallize said glass precursor, then said transparent glass ceramic emitting white light is obtained.

In the preparation method of the present invention, in said step 1, a is in the range of 40 to 50, b is in the range of 20 to 30, c is in the range of 10 to 20, d is in the range of 10 to 20, x is in the range of 0.1 to 1. In said step 2, heating is carried out in the temperature range of 1300°C to 1500°C, keep the temperature constant for 0.5 to 5h. In said step 3, said mould is copper mould, the temperature of pre-heating is 300°C. In said step 4, annealing is carried out under the temperature maintained at 500°C for 2h. In said step 4, after annealing, heating to temperature ranged from 600°C to 700°C, keep the temperature constant for 1 to 10h.

The transparent glass ceramic emitting light can replace the combination of epoxy resin or silica gel and fluorescent powder to seal LED. The transparent glass ceramic has strong excitation spectrum with broadband at ultraviolet area, and can emit strong white light under the excitation of ultraviolet light. Compared with powder materials, prominent advantages of glass emitting light: (1) good light transmittance; (2) good chemical stability and thermal stability; (3) simple process, low price; (4) easy to make into cubes in difference shapes; (5) good uvioresistant and ageing resistance. Thus, it is very suitable for luminescent medium material in the field of LED lighting.

### BRIEF DESCRIPTION OF THE DRAWINGS

Further description of the present invention will be illustrated, which combined with embodiments in the drawings:

FIG. 1 is a flow chart of the preparation methods of transparent glass ceramic emitting white light of the present invention;

FIG. 2 is an emission spectrum of light emitting glass doped with 0.1% DyF₃ in the Example 7 with respect to the emission spectrum of light emitting glass undoped with DyF₃, herein the excitation wavelength is 255nm.

FIG. 3 is an emission spectrum of light emitting glass doped with 0.2% DyF₃ in the Example 8 with respect to the emission spectrum of light emitting glass undoped with DyF₃, herein the excitation wavelength is 255nm.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a transparent glass ceramic emitting white light, said transparent glass ceramic emitting white light has the chemical formula of aSiO₂·bAl₂O₃·cNaF·dCeF₃·xDyF₃, wherein a, b, c, d, and x are mole fractions, a+b+c+d=100, a is in the range of 35 to 50, b is in the range of 15 to 30, c is in the range of 5 to 20, d is in the range of 5 to 20, x is in the range of 0.01 to 1. In the transparent glass ceramic emitting white light of the present invention, a is in the range of 40 to 50, b is in the range of 20 to 30, c is in the range of 10 to 20, d is in the range of 10 to 20, x is in the range of 0.1 to 1.

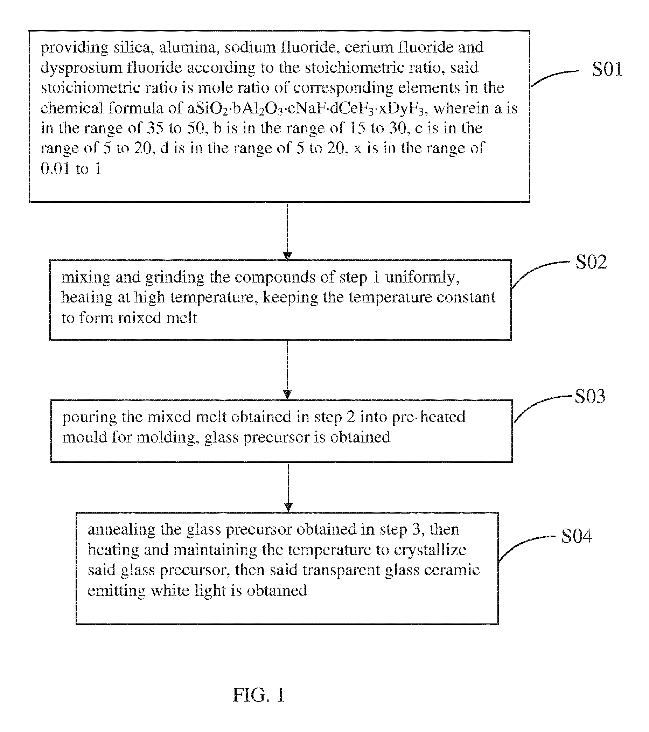

Referring to FIG. 1, it will be understood that FIG. 1 shows the process of the preparation methods of transparent glass ceramic emitting white light of the present invention, the preparation method comprises:

S01: providing silica, alumina, sodium fluoride, cerium fluoride and dysprosium fluoride according to the stoichiometric ratio, said stoichiometric ratio is mole ratio of corresponding elements in the chemical formula of aSiO₂·bAl₂O₃·cNaF·dCeF₃·xDyF₃, wherein a is in the range of 35 to 50, b is in the range of 15 to 30, c is in the range of 5 to 20, d is in the range of 5 to 20, x is in the range of 0.01 to 1;

S02: mixing and grinding the compounds of S01 uniformly, heating at high temperature, keeping the temperature constant to form mixed melt;

S03: pouring the mixed melt of S02 into pre-heated mould for molding, glass precursor is obtained;

S04: annealing the glass precursor of S03, then heating and maintaining the temperature to crystallize said glass precursor, then said transparent glass ceramic emitting white light is obtained.

In the preparation method of the present invention, in said S01, a is in the range of 40 to 50, b is in the range of 20 to 30, c is in the range of 10 to 20, d is in the range of 10 to 20, x is in the range of 0.1 to 1. In said S02, heating is carried out in resistance furnace in the temperature range of 1300°C to 1500°C, keep the temperature constant for 0.5 to 5h. In said S03, pre-heating is carried out in copper mould, the temperature of pre-heating is 300°C. In said S04, annealing is carried out under the temperature maintained at 500°C for 2h; after annealing, heating to temperature ranged from 600°C to 700°C, keep the temperature constant for 1 to 10h in order to crystallize it partially.

The transparent glass ceramic emitting light can replace the combination of epoxy resin or silica gel and fluorescent powder to seal LED. The transparent glass ceramic has strong excitation spectrum with broadband at ultraviolet area, and can emit strong white light under the excitation of ultraviolet light. Compared with powder materials, prominent advantages of glass emitting light: (1) good light transmittance; (2) good chemical stability and thermal stability; (3) simple process, low price; (4) easy to make into cubes in difference shapes; (5) good uvioresistant and ageing resistance. Thus, it is very suitable for luminescent medium material in the field of LED lighting.

Special examples are disclosed as follows to demonstrate preparation method of transparent glass ceramic emitting white light of the present invention and other properties.

Example 1

The raw materials including 7.03g of silica (SiO₂), 10.23g of alumina (Al₂O₃), 2.81g of sodium fluoride (NaF), 9.89g of cerium fluoride (CeF₃), 0.006g of dysprosium fluoride (DyF₃) were grinded and mixed uniformly in mortar, then placed into a corundum crucible. The corundum crucible with lid where the raw materials were loaded was placed into a 1300°C box-type high-temperature furnace for melting, the temperature was maintained for 0.5h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 600°C for 10h. Turning off the resistance furnace, cooling together with the furnace to the room temperature. Transparent glass ceramic emitting white light containing CeF₃ nanocrystalline having the chemical formula of 35SiO₂·30Al₂O₃·20NaF·15CeF₃·0.01DyF₃ is obtained.

Example 2

The raw materials including 7.72g of silica, 6.55g of alumina, 2.69g of sodium fluoride, 12.66g of cerium fluoride, 0.7g of dysprosium fluoride were grinded and mixed uniformly in mortar, then placed into a corundum crucible. The corundum crucible with lid where the raw materials were loaded was placed into a 1400°C box-type high-temperature furnace for melting, the temperature was maintained for 5h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 650°C for 1h. Turning off the resistance furnace, cooling together with the furnace to the room temperature. Transparent glass ceramic emitting white light containing CeF₃ nanocrystalline having the chemical formula of 40SiO₂·20Al₂O₃·20NaF·20CeF₃·1DyF₃ is obtained.

Example 3

The raw materials including 9.87g of silica, 5.02g of alumina, 2.07g of sodium fluoride, 12.95g of cerium fluoride, 0.07g of dysprosium fluoride were grinded and mixed uniformly in mortar, then placed into a corundum crucible. The corundum crucible with lid where the raw materials were loaded was placed into a 1450°C box-type high-temperature furnace for melting, the temperature was maintained for 2h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 700°C for 1h. Turning off the resistance furnace, cooling together with the furnace to the room temperature. Transparent glass ceramic emitting white light containing CeF₃ nanocrystalline having the chemical formula of 50SiO₂·15Al₂O₃·15NaF·20CeF₃·0.1DyF₃ is obtained.

Example 4

The raw materials including 9.71g of silica, 9.89g of alumina, 0.67g of sodium fluoride, 9.56g of cerium fluoride, 0.14g of dysprosium fluoride were grinded and mixed uniformly in mortar, then placed into a corundum crucible. The corundum crucible with lid where the raw materials were loaded was placed into a 1500°C box-type high-temperature furnace for melting, the temperature was maintained for 2h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 700°C for 5h. Turning off the resistance furnace, cooling together with the furnace to the room temperature. Transparent glass ceramic emitting white light containing CeF₃ nanocrystalline having the chemical formula of 50SiO₂·30Al₂O₃·5NaF·15CeF₃·0.2DyF₃ is obtained.

Example 5

The raw materials including 11.63g of silica, 11.84g of alumina, 2.43g of sodium fluoride, 3.81g of cerium fluoride, 0.25g of dysprosium fluoride were grinded and mixed uniformly in mortar, then placed into a corundum crucible. The corundum crucible with lid where the raw materials were loaded was placed into a 1450°C box-type high-temperature furnace for melting, the temperature was maintained for 3h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 650°C for 3h. Turning off the resistance furnace, cooling together with the furnace to the room temperature. Transparent glass ceramic emitting white light containing CeF₃ nanocrystalline having the chemical formula of 50SiO₂·30Al₂O₃·15NaF·5CeF₃·0.3DyF₃ is obtained.

Example 6

The raw materials including 10.63g of silica, 10.82g of alumina, 1.48g of sodium fluoride, 6.97g of cerium fluoride, 0.07g of dysprosium fluoride were grinded and mixed uniformly in mortar, then placed into a corundum crucible. The corundum crucible with lid where the raw materials were loaded was placed into a 1450°C box-type high-temperature furnace for melting, the temperature was maintained for 4h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 670°C for 2h. Turning off the resistance furnace, cooling together with the furnace to the room temperature. Transparent glass ceramic emitting white light containing CeF₃ nanocrystalline having the chemical formula of 50SiO₂·30Al₂O₃·10NaF·10CeF₃·0.1DyF₃ is obtained.

Example 7

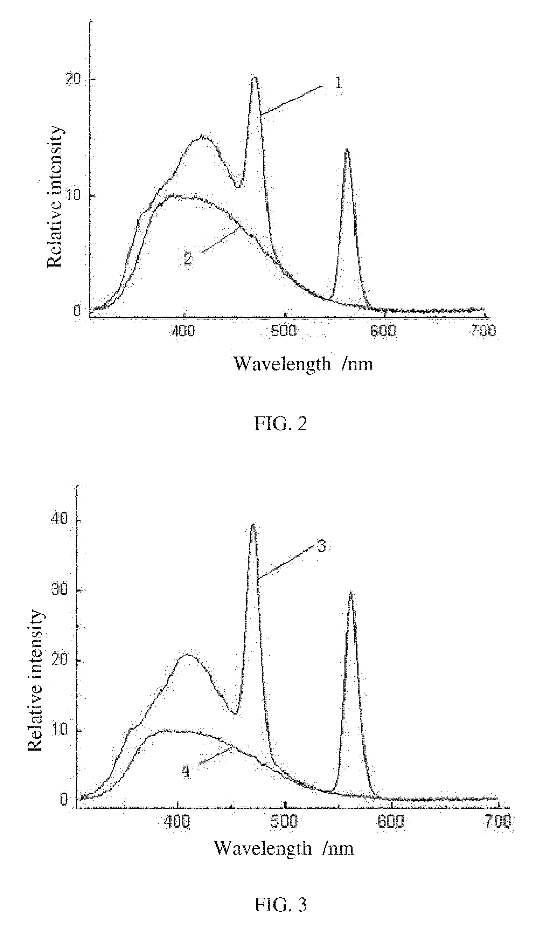

The raw materials including 8.69g of silica, 11.06g of alumina, 3.03g of sodium fluoride, 7.12g of cerium fluoride, 0.07g of dysprosium fluoride were grinded and mixed uniformly in mortar, then placed into a corundum crucible. The corundum crucible with lid where the raw materials were loaded was placed into a 1350°C box-type high-temperature furnace for melting, the temperature was maintained for 2h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 650°C for 2h. Turning off the resistance furnace, cooling together with the furnace to the room temperature. Transparent glass ceramic emitting white light containing CeF₃ nanocrystalline having the chemical formula of 40SiO₂·30Al₂O₃·20NaF·10CeF₃·0.1DyF₃ is obtained. Preparing sample undoped with DyF₃ by using the same method. As shown in FIG. 2, FIG. 2 is an emission spectrum (curve 1) of sample doped with 0,1mol% DyF₃ of the present embodiment with respect to the emission spectrum (curve 2) of sample undoped with DyF₃ at the excitation wavelength of 255nm. The main peaks at about 420nm, about 470nm and about 562nm combine to generate white light.

Example 8

The raw materials including 8.03g of silica, 9.45g of alumina, 2.38g of sodium fluoride, 9.88g of cerium fluoride, 0.14g of dysprosium fluoride were grinded and mixed uniformly in mortar, then placed into a corundum crucible. The corundum crucible with lid where the raw materials were loaded was placed into a 1400°C box-type high-temperature furnace for melting, the temperature was maintained for 2h. After that, the glass melt was poured into a 300°C pre-heated copper mould to press into a transparent glass, in the resistance furnace, the temperature is maintained at 500°C for 2h. Annealing, cooling together with the furnace to the room temperature for the purpose of residual stress relieving. Then, the annealed glass was cut into pieces of sample in size of 10mm×10mm×2mm and placed into resistance furnace. The thermal treatment of samples for crystallization is carried out at 650°C for 2h. Turning off the resistance furnace, cooling together with the furnace to the room temperature. Transparent glass ceramic emitting white light containing CeF₃ nanocrystalline having the chemical formula of 40SiO₂·28Al₂O₃·17NaF·15CeF₃·0.2DyF₃ is obtained. Preparing sample undoped with DyF₃ by using the same method. As shown in FIG. 3, FIG. 3 is an emission spectrum (curve 3) of sample doped with 0.2mol% DyF₃ of the present embodiment with respect to the emission spectrum (curve 4) of sample undoped with DyF₃ at the excitation wavelength of 255nm. The main peaks at about 420nm, about 470nm and about 562nm combine to generate white light.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. A transparent glass ceramic emitting white light, wherein said transparent glass ceramic emitting white light has the chemical formula of aSiO₂·bAl₂O₃·cNaF·dCeF₃·xDyF₃, wherein a, b, c, d, and x are mole fractions, a+b+c+d=100, a is in the range of 35 to 50, b is in the range of 15 to 30, c is in the range of 5 to 20, d is in the range of 5 to 20, x is in the range of 0.01 to 1.

2. A transparent glass ceramic emitting white light as in claim 1, wherein a is in the range of 40 to 50, b is in the range of 20 to 30, c is in the range of 10 to 20, d is in the range of 10 to 20, x is in the range of 0.1 to 1.

3. A preparation method of transparent glass ceramic emitting white light, comprising:
step 1: providing silica, alumina, sodium fluoride, cerium fluoride and dysprosium fluoride according to the stoichiometric ratio, said stoichiometric ratio is mole ratio of corresponding elements in the chemical formula of aSiO₂·bAl₂O₃·cNaF·dCeF₃·xDyF₃, wherein a is in the range of 35 to 50, b is in the range of 15 to 30, c is in the range of 5 to 20, d is in the range of 5 to 20, x is in the range of 0.01 to 1;
step 2: mixing and grinding the compounds of step 1 uniformly, heating at high temperature, keeping the temperature constant to form mixed melt;
step 3: pouring the mixed melt obtained instep 2 into pre-heated mould for molding, glass precursor is obtained;
step 4: annealing the glass precursor obtained in step 3, then heating and maintaining the temperature to crystallize said glass precursor, then said transparent glass ceramic emitting white light is obtained.

4. Preparation method of transparent glass ceramic emitting white light as in claim 3, wherein in said step 1, a is in the range of 40 to 50, b is in the range of 20 to 30, c is in the range of 10 to 20, d is in the range of 10 to 20, x is in the range of 0.1 to 1.

5. Preparation method of transparent glass ceramic emitting white light as in claim 3, wherein in said step 2, heating is carried out in the temperature range of 1300°C to 1500°C, keep the temperature constant for 0.5 to 5h.

6. Preparation method of transparent glass ceramic emitting white light as in claim 3, wherein in said step 3, said mould is copper mould, the temperature of pre-heating is 300°C.

7. Preparation method of transparent glass ceramic emitting white light as in claim 3, wherein in said step 4, annealing is carried out under the temperature maintained at 500°C for 2h.

8. Preparation method of transparent glass ceramic emitting white light as in claim 3, wherein in said step 4, after annealing, heating to temperature ranged from 600°C to 700°C, keep the temperature constant for 1 to 10h.
